# FASCICULE DE BREVET EUROPEEN

(11) **EP 1 102 941 B1**
(45) Date de publication et mention de la délivrance du brevet: **02.05.2003**
(21) Numéro de dépôt: 00936977.8
(22) Date de dépôt: 30.05.2000
(51) Int. Cl.: F16H 25/20, F16H 35/10

(54) **VERIN D'ACTIONNEMENT A LIMITEUR DE COUPLE ET MAINTIEN D'EFFORT DE POUSSEE ET/OU DE TRACTION**
STELLGLIED MIT DREHMOMENTBESCHRÄNKUNG UND BEIBEHALTUNG DER DRUCK- UND/ODER ZUGKRAFT
TORQUE LIMITER AND THRUST/TRACTION MAINTENANCE SCREW ACTUATOR

(30) Priorité: 04.06.1999 FR 9907082
(43) Date de publication de la demande: 30.05.2001
(73) Titulaire: Mifsud, Gilles, F-77163 Mortcerf (FR); Breiter, Martin, F-75020 Paris (FR)
(72) Inventeur: BREITER, Martin, F-75020 Paris (FR)
(74) Mandataire: Chambon, Gérard
(86) Numéro de dépôt international: FR0001478
(87) Numéro de publication internationale: WO00075533

(56) Documents cités:
- DE-A- 3 615 285
- GB-A- 2 102 910
- US-A- 3 229 544

## Description

L'invention concerne un vérin d'actionnement à limiteur de couple et maintien d'effort de poussée et/ou de traction selon le préambule de la revendication 1.

Les vérins d'actionnement sont multiples.

Dans le domaine du serrage, on utilise par exemple des vérins pneumatiques ou électriques susceptibles d'entraîner au moins un bras ou abattant de serrage.

On sait assurer un serrage déterminé avec un vérin pneumatique, bien que celui-ci réclame un réglage délicat de la vitesse des limiteurs de débit.

Les avantages des vérins électriques pour un serrage par rapport aux vérins pneumatiques sont importants, notamment en ce qui concerne la facilité et la rapidité du branchement, la durée constante du mouvement des éléments mobiles qui est indépendante de la longueur et de la masse du bras ou abattant, la consommation d'énergie qui est nettement plus faible, les mouvements plus silencieux et sans choc (d'où une protection de l'outil et des pièces à serrer), etc.

C'est pourquoi on a cherché aussi à assurer un serrage permanent et sous une certaine force constante après l'actionnement dudit bras ou abattant avec des vérins électriques et pour cela, on a déjà imaginé d'asservir le moteur électrique d'actionnement du vérin.

Toutefois, un tel asservissement est coûteux et délicat et c'est pourquoi l'inventeur propose un dispositif simple dont la mécanique permet d'assurer à la fois la limitation voulue du couple de serrage et donc la force désirée pour ledit serrage mais aussi la conservation de cette force après l'arrêt du moteur d'actionnement du vérin. De la sorte, avec un vérin électrique, on peut atteindre un coût comparable aux vérins pneumatiques.

Cependant, l'actionnement du vérin selon l'invention pourrait en fait être réalisé par tout moyen électrique ou non puisqu'il est indépendant du moyen d'entraînement et ledit vérin peut en outre fonctionner en poussée comme en traction, offrant ainsi de multiples applications.

Pour atteindre ce but, le vérin d'actionnement selon l'invention comporte de manière classique un écrou en prise avec une vis, ledit écrou, ou respectivement ladite vis, étant solidaire d'une douille rotative de telle sorte que la rotation de ladite douille entraîne par rapport à celle-ci un mouvement translatif de la vis, ou respectivement de l'écrou, qui peut ainsi agir sur tout moyen extérieur par poussée et/ou traction, mais il est notamment remarquable en ce que la douille est montée libre en rotation et en translation dans un corps d'entraînement, lui-même monté libre en rotation et fixe en translation dans un carter fixe, en ce que la douille est montée rotative dans deux couronnes qui sont aménagées de manière mobile en translation et entraînables en rotation par ledit corps d'entraînement en étant sollicitées longitudinalement l'une vers l'autre par au moins deux moyens élastiques de compression opposés, en ce que les couronnes présentent des moyens de solidarisation dans un sens de rotation et au moins un sens de translation avec la douille, les sens de rotation étant inversés d'une couronne à l'autre, et en ce que l'entraînement en rotation d'au moins l'une des couronnes avec le corps d'entraînement est assuré par un moyen de friction disposé entre ladite couronne et le moyen élastique correspondant dont la force de compression peut ainsi être diminuée par le déplacement translatif de la douille dans le sens de la décompression dudit moyen élastique lors d'un effort exercé à l'encontre du mouvement translatif de la vis, ou respectivement de l'écrou, entraînant ainsi le débrayage par patinage dudit moyen de friction et une augmentation de la force de compression du moyen élastique opposé.

Avantageusement, les couronnes sont toutes les deux entraînables en rotation avec le corps d'entraînement par un moyen de friction débrayable par patinage, de telle sorte que le débrayage peut s'effectuer dans les deux sens du mouvement translatif de la vis, ou respectivement de l'écrou.

Par exemple, chaque moyen de friction est constitué par une rondelle de friction et une rondelle dite d'embrayage qui est interposée entre ladite rondelle de friction et le moyen élastique de compression correspondant, tandis que les moyens élastiques de compression sont calés chacun entre, d'une part, une partie du corps d'entraînement, ou une partie solidaire de celui-ci, et d'autre part, le moyen de friction pour au moins l'un desdits moyens élastiques.

Selon un mode de réalisation, les moyens élastiques sont constitués chacun par un empilement de rondelles élastiques.

Par exemple, les moyens de solidarisation en rotation de chaque couronne avec la douille comportent au moins un cliquet d'entraînement disposé entre ladite couronne et ladite douille, ou encore sont des moyens de roue libres.

Selon un mode de réalisation, la combinaison vis-écrou est du type irréversible, mais avec un corps mû par un moteur, la combinaison vis-écrou peut aussi être du type réversible, le moteur étant alors muni d'un frein.

Selon une application non exclusive, la vis, ou respectivement l'écrou, est prévu pour venir actionner un dispositif de serrage, de telle sorte que lorsque ladite vis ou écrou rencontre une force de résistance en fin de serrage, cette résistance provoque un débrayage du moyen de friction correspondant dès que la force de compression de son moyen élastique n'est plus suffisante, une force de serrage prédéterminée étant par contre maintenue par la force accrue de compression du moyen élastique opposé. Toutefois, il est clair que l'invention n'est évidemment pas limitée à cette application, mais elle concerne bien d'autres domaines en vue d'actionner des chariots, des systèmes de préhension, des objets à déplacer, etc.

L'invention sera bien comprise à la lecture de la description qui va suivre et qui se réfère aux dessins annexés dans lesquels:
- la figure 1 représente en coupe longitudinale un vérin selon l'invention d'après un mode de réalisation pourvu d'une vis en prise avec un écrou fixe en translation,
- la figure 2 est une coupe transversale selon la ligne II-II de la figure 1,
- la figure 3 est une coupe transversale selon la ligne III-III de la figure 1,
- la figure 4 est une coupe longitudinale d'un vérin selon un autre mode de réalisation qui correspond à celui des figures 1 à 3 mais dans lequel c'est la vis qui est fixe en translation,
- la figure 5 représente en perspective l'application d'un vérin selon l'invention, dans un dispositif de serrage.

Le vérin d'actionnement selon l'invention est représenté à titre d'exemple sur les dessins selon deux modes de réalisation.

Les deux modes de réalisation possèdent les mêmes éléments qui portent en conséquence les mêmes références, à l'exception toutefois de la vis et de l'écrou qui portent des références distinctes d'un mode de réalisation à l'autre du fait d'un montage inversé, les références étant différentes par le chiffre des centaines correspondant au numéro de la figure concernée.

Le vérin comporte un carter 1 fixé sur une embase 2, dans lequel est monté libre en rotation mais fixe en translation, un corps 3 d'entraînement.

Le corps 3 est, par exemple, monté rotatif dans le carter 1 et son embase 2 au moyen de paliers 4 qui vont en outre absorber les efforts axiaux et radiaux.

Dans le corps 3 est aménagée une douille 5 qui est montée libre en rotation et en translation au moyen, par exemple, de bagues 6 assurant ce double degré de liberté.

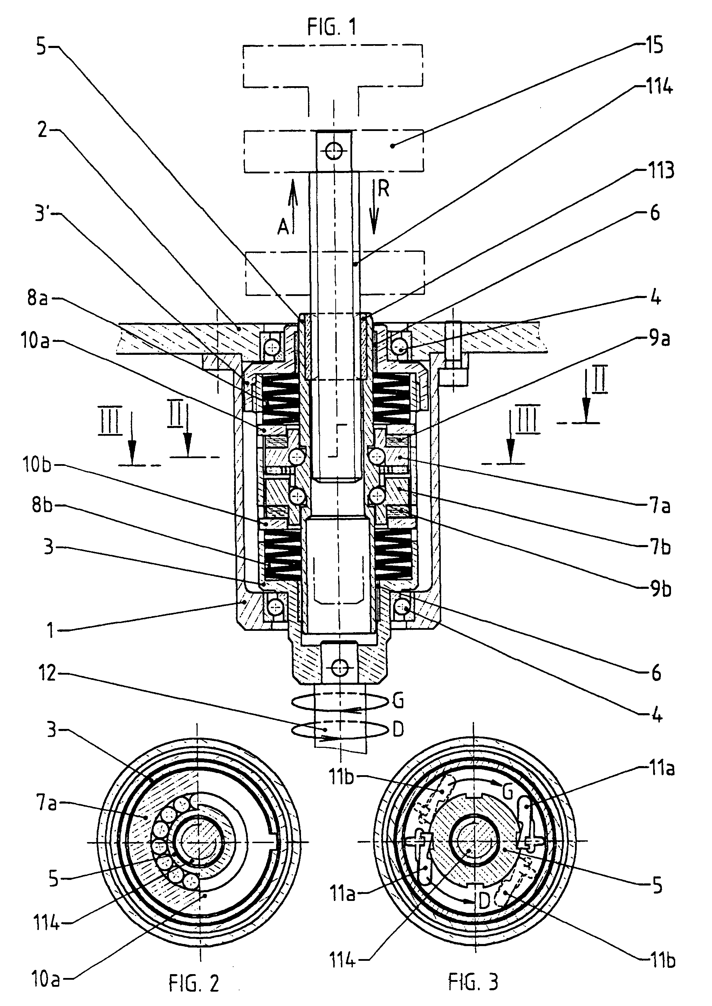

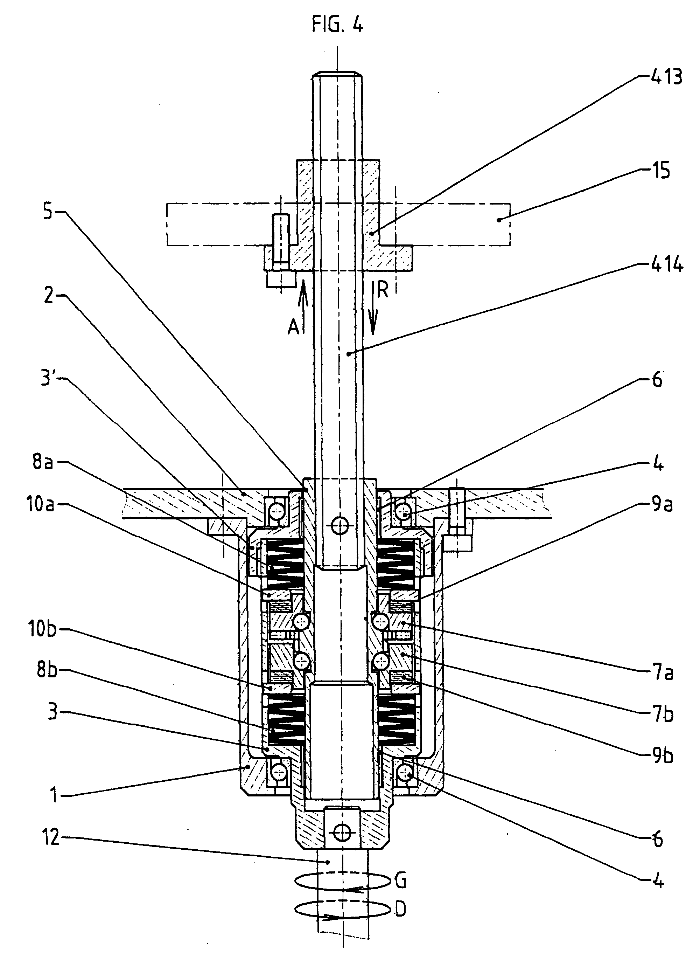

En outre, comme le montrent bien les figures 1 et 4, la douille 5 est montée rotative dans deux couronnes à billes 7a, 7b.

Les couronnes 7a, 7b, comme le montrent les dessins, sont mobiles en translation et entraînables en rotation par le corps 3 comme il sera expliqué ci-après.

Les couronnes 7a, 7b sont sollicitées longitudinalement l'une vers l'autre par des moyens élastiques de compression 8a, 8b opposés, sous forme par exemple d'empilements de rondelles élastiques, lesdits empilements étant calés à l'une de leurs extrémités sur une partie du corps d'entraînement, ou sur une partie solidaire de celui-ci, comme le couvercle 3' qui ferme ici en partie l'une des extrémités du corps 3.

L'entraînement en rotation des couronnes 7a, 7b par le corps 3 comme mentionné ci-avant, est obtenu par des moyens de friction disposés entre chaque couronne et le moyen élastique correspondant, et qui se présentent ici chacun sous la forme d'une rondelle de friction 9a, 9b et une rondelle dite d'embrayage 10a, 10b, ces dernières étant solidaires en rotation avec le corps 3.

Par ailleurs, les couronnes 7a, 7b sont solidaires en translation avec la douille 5 en s'appuyant sur elle par l'intermédiaire des billes dont elles sont munies et elles sont en outre pourvues de moyens de solidarisation dans un sens de rotation avec ladite douille 5, lesdits moyens étant, par exemple, réalisés sous forme de paires de cliquets 11a, 11b (figure 3) avec la particularité de permettre des entraînements en rotation dans des sens inversés d'une couronne à l'autre et en particulier ici, dans le sens menant selon la flèche G pour les cliquets 11a de la couronne 7a (et libre dans le sens de la flèche D) comme on peut le comprendre aisément avec la figure 3, et l'inverse pour les cliquets 11b de la couronne 7b (menant dans le sens D et libre dans le sens G).

Le corps 3 est destiné à être entraîné en rotation par tout moyen et par exemple par l'arbre 12 d'un moteur, en particulier un moteur électrique asynchrone.

Enfin, comme le montrent bien les figures 1 et 4, la douille 5 est solidaire d'un écrou 113 (figure 1) ou d'une vis 414 (figure 4) en prise avec respectivement une vis 114 (figure 1) ou un écrou 413 (figure 4).

Dans le mode de réalisation de la figure 1 où l'écrou est solidaire de la douille 5, c'est la vis 114 qui est destinée à mouvoir l'embout 15 d'une pièce, sur lequel elle est fixée ici par son extrémité, tandis que dans le mode de réalisation de la figure 4, où la vis 414 est solidaire de la douille 5, par exemple au moyen d'une clavette, c'est l'écrou 413 qui peut mouvoir l'embout 15 auquel il est fixé.

Le fonctionnement est le suivant.

L'arbre moteur 12 entraîne en rotation le corps 3 qui entraîne à son tour les rondelles d'embrayage 10a, 10b, lesquelles sont soumises, comme décrit ci-avant, à la sollicitation des moyens élastiques 8a, 8b, ce qui a pour effet d'entraîner en rotation par friction ou frottement les rondelles 9a, 9b ainsi donc que les couronnes 7a, 7b.

Comme déjà dit, les cliquets 11a et 11b permettent aux couronnes 7a, 7b d'entraîner en rotation la douille 5 dans le sens G pour la couronne 7a et dans le sens D pour la couronne 7b.

En conséquence, si l'arbre moteur 12 tourne dans le sens G, la couronne 7a entraîne la douille 5 par ses cliquets 11a tandis que la couronne 7b est libre en rotation de telle sorte que l'écrou 113 (figure 1) ou la vis 414 (figure 4) tourne dans le sens G, provoquant par dévissage une translation, dans le sens de la flèche A, de la vis 114 ou respectivement de l'écrou 413 avec un mouvement correspondant de l'embout 15.

En sens inverse, c'est-à-dire avec une rotation dans le sens D, on comprend aisément que c'est la couronne 7b et ses cliquets 11b qui vont entraîner la douille 5 et donc l'écrou 113, ou respectivement la vis 414, dans le sens D provoquant en conséquence par vissage, une translation dans le sens de la flèche R, de la vis 114, ou respectivement de l'écrou 413, avec un mouvement correspondant de l'embout 15.

En l'absence de résistance extérieure sur l'embout 15, le vérin se comporte comme un vérin à vis classique.

En reprenant le fonctionnement précédent, pour une rotation dans le sens G et donc un mouvement de l'embout 15 dans le sens de la flèche A, imaginons que ledit embout 15 rencontre un obstacle ou arrive en fin de course, il est clair que l'écrou 113, ou la vis 414, qui continue à tourner et qui est toujours en prise avec la vis 114 ou respectivement l'écrou 413 bloqué en translation, subit un mouvement avec la douille 5 solidaire, dans le sens inverse, c'est-à-dire selon la flèche R.

De la sorte, le moyen élastique 8b se comprime tandis que le moyen élastique 8a se décomprime jusqu'à ce que la couronne 7a ne soit plus entraînée en rotation par la rondelle de friction 9a faute de pression suffisante (ajustable en choisissant les moyens notamment élastiques de manière appropriée), tandis que la couronne 7b continue à tourner sans pouvoir entraîner la douille 5.

Ainsi, l'écrou 113, ou respectivement la vis 414, s'arrête de tourner, l'embout 15 étant déjà immobilisé.

L'arbre moteur 12 pourra continuer à tourner et l'ensemble se comportera comme un limiteur de couple avec patinage sur la rondelle 9a.

Toutefois, même si l'arbre moteur 12 est arrêté, on comprend qu'un effort résiduel provenant de la compression du moyen élastique 8b agit toujours sur la douille 5 et donc sur la vis 114 ou l'écrou 413 et par voie de conséquence sur l'embout 15.

Dans le cas d'un ensemble vis/écrou réversible (vis à billes par exemple), le moteur qui entraîne l'arbre 12 sera équipé d'un frein, ce qui est par contre inutile dans le cas d'un ensemble vis/écrou irréversible (vis trapézoïdale par exemple).

On comprend aisément qu'avec une rotation inverse de l'arbre 12, donc dans le sens de rotation D, c'est la couronne 7b qui entraîne la douille 5 au moyen des cliquets 11b de telle sorte que les moyens élastiques 8a, 8b se rééquilibrent, puis la vis 114, ou l'écrou 413, prend avec l'embout 15 un mouvement selon la flèche R.

Etant donné la symétrie du dispositif (avec deux systèmes de friction débrayables) on comprend que celui-ci peut fonctionner comme décrit dans le sens de la poussée, mais aussi dans le sens tirant, avec résistance éventuelle dans ce sens.

De nombreux moyens peuvent être modifiés ou remplacés sans sortir du cadre de l'invention qui est défini dans les revendications, comme par exemple des moyens de friction ou élastiques différents (ressorts hélicoïdaux, ...), ou encore des systèmes de type roues libres à la place des cliquets, etc.

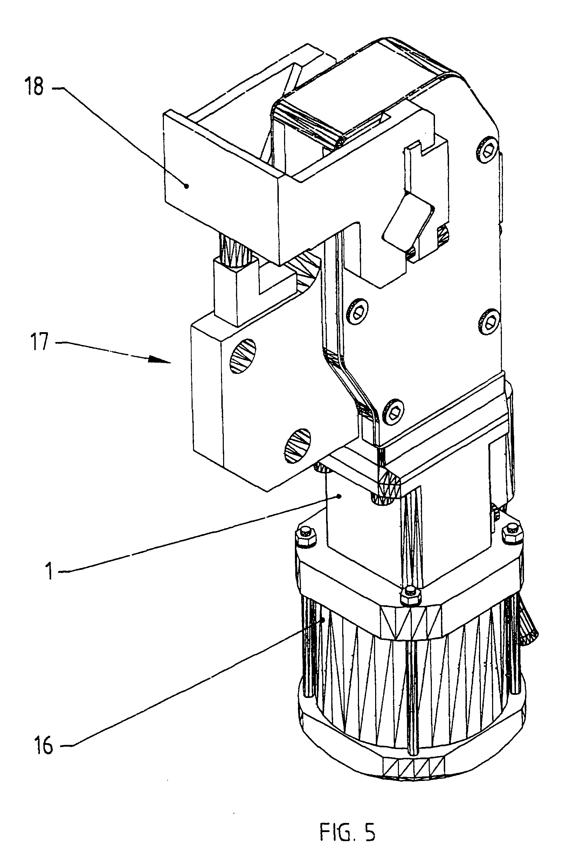

La figure 5 montre une application tout à fait intéressante qui fonctionne de la manière décrite précédemment.

La figure 5 représente en perspective un vérin selon l'invention dont on voit le carter 1 aménagé comme un coupleur entre un moteur 16 électrique, du type asynchrone par exemple, et un dispositif de serrage 17 muni d'un bras ou abattant 18 actionné par des cames mues par le vérin selon l'invention.

On comprend tout l'intérêt de l'invention pour cette application.

En effet, le vérin selon l'invention déplacera l'abattant 18 destiné à serrer une pièce jusqu'à ce qu'une certaine force (dépendant du tarage des moyens élastiques décrits ci-avant) s'applique sur la pièce à serrer, le moteur 16 pouvant même continuer à fonctionner.

Comme décrit ci-avant, même après l'arrêt du moteur 16, l'abattant 18 exercera une certaine force de serrage.

## Revendications

1. Vérin d'actionnement comportant un écrou (113,413) en prise avec une vis (114,414), ledit écrou (113), ou respectivement ladite vis (414), étant solidaire d'une douille (5) rotative de telle sorte que la rotation de ladite douille entraîne par rapport à celle-ci un mouvement translatif de la vis (114), ou respectivement de l'écrou (413) qui peut ainsi agir sur tout moyen extérieur (15) par poussée et/ou traction, vérin ***caractérisé en ce* que** la douille (5) est montée libre en rotation et en translation dans un corps d'entraînement (3), lui-même monté libre en rotation et fixe en translation dans un carter fixe (1), **en ce que** la douille (5) est montée rotative dans deux couronnes (7a,7b) qui sont aménagées de manière mobile en translation et entraînables en rotation par ledit corps d'entraînement (3) en étant sollicitées longitudinalement l'une vers l'autre par au moins deux moyens élastiques de compression (8a,8b) opposés, **en ce que** les couronnes (7a,7b) présentent des moyens de solidarisation dans un sens de rotation (11a,11b) et au moins un sens de translation avec la douille (5), les sens de rotation étant inversés d'une couronne à l'autre, et **en ce que** l'entraînement en rotation d'au moins l'une des couronnes (7a,7b) avec le corps d'entraînement (3) est assuré par un moyen de friction (9a,10a; 9b,10b) disposé entre ladite couronne et le moyen élastique (8a,8b) correspondant dont la force de compression peut ainsi être diminuée par le déplacement translatif de la douille (5) dans le sens de la décompression dudit moyen élastique lors d'un effort exercé à l'encontre du mouvement translatif de la vis (114), ou respectivement de l'écrou (413), entraînant ainsi le débrayage par patinage dudit moyen de friction et une augmentation de la force de compression du moyen élastique (8a,8b) opposé.

2. Vérin d'actionnement selon la revendication 1, ***caractérisé en ce* que** les couronnes (7a,7b) sont toutes les deux entraînables en rotation avec le corps d'entraînement (3) par un moyen de friction (9a,10a; 9b,10b) débrayable par patinage, de telle sorte que le débrayage peut s'effectuer dans les deux sens du mouvement translatif de la vis (114), ou respectivement de l'écrou (413).

3. Vérin d'actionnement selon l'une des revendications 1 et 2, ***caractérisé en ce que*** chaque moyen de friction est constitué par une rondelle de friction (9a,9b) et une rondelle dite d'embrayage (10a,10b) qui est interposée entre ladite rondelle de friction (9a,9b) et le moyen élastique de compression correspondant (8a,8b).

4. Vérin d'actionnement selon l'une des revendications 1 à 3, ***caractérisé en* ce *que*** les moyens élastiques de compression (8a,8b) sont calés chacun entre, d'une part, une partie du corps d'entraînement (3), ou une partie solidaire (3') de celui-ci, et d'autre part, le moyen de friction (9a,10a; 9b,10b) pour au moins l'un desdits moyens élastiques (8a,8b).

5. Vérin d'actionnement selon l'une des revendications 1 à 4, ***caractérisé en ce que*** les moyens élastiques (8a,8b) sont constitués chacun par un empilement de rondelles élastiques.

6. Vérin d'actionnement selon l'une des revendications 1 à 5, ***caractérisé en* ce *que*** les moyens de solidarisation en rotation de chaque couronne (7a,7b) avec la douille (5) comportent au moins un cliquet (11a,11b) d'entraînement disposé entre ladite couronne (7a,7b) et ladite douille (5).

7. Vérin d'actionnement selon l'une des revendications 1 à 5, ***caractérisé en* ce que** les moyens de solidarisation en rotation de chaque couronne (7a,7b) avec la douille (5) sont des moyens de roues libres.

8. Vérin d'actionnement selon l'une des revendications 1 à 7, ***caractérisé en ce que*** la combinaison vis-écrou (114,113; 414,413) est du type irréversible.

9. Vérin d'actionnement selon l'une des revendications 1 à 7 dont le corps (3) est mû par un moteur (16), ***caractérisé en ce que*** la combinaison vis-écrou (114,113; 414,413) est du type réversible et que le moteur est muni d'un frein.

10. Vérin d'actionnement selon l'une des revendications 1 à 9 dont la vis (114), ou respectivement l'écrou (413) est prévu pour venir actionner un dispositif de serrage (17), de telle sorte que lorsque ladite vis ou écrou rencontre une force de résistance en fin de serrage, cette résistance provoque un débrayage du moyen de friction correspondant (9a,10a) dès que la force de compression de son moyen élastique (8a) n'est plus suffisante, une force de serrage prédéterminée étant par contre maintenue par la force accrue de compression du moyen élastique opposé (8b).

## Patentansprüche

1. Stellglied mit einer Mutter (113,413), die mit einer Schraube (114, 414) im Eingriff steht, wobei die Mutter (113) bzw. die Schraube (414) in der Weise fest in einer drehbaren Hülse (5) sitzt, dass die Drehung der Hülse relativ zu dieser eine Längsbewegung der Schraube (114) bzw. der Mutter (413) erzeugt, die somit auf irgendeine externe Einrichtung (15) mit Druck oder Zug wirken kann, **dadurch gekennzeichnet, dass** die Hülse (5) frei drehbar und längs verschiebbar in einem Antriebskörper (3) gelagert ist, der selbst frei drehbar und in Längsrichtung unverschiebbar in einem festen Gehäuse (1) angeordnet ist, dass die Hülse (5) drehbar in zwei Kränzen (7a, 7b) sitzt, die in Längsrichtung verschieblich und in Drehrichtung von dem Antriebskörper (3) antreibbar sind und mit Hilfe von mindestens zwei einander gegenüberliegenden elastischen Druckeinrichtungen in Längsrichtung gegeneinander gespannt sind, dass die Kränze (7a, 7b) zusammen mit der Hülse (5) eine Feststelleinrichtung in einer Drehrichtung (11a, 11b) und in mindestens einer Längsrichtung darstellen, wobei die Drehrichtungen von einem Kranz zum anderen umgekehrt werden, und dass der Rotationsantrieb von mindestens einem der Kränze (7a, 7b) mit dem Antriebskörper (3) von einer Reibeinrichtung (9a, 10a; 9b, 10b) bewirkt wird, die zwischen dem besagten Kranz und der entsprechenden elastischen Einrichtung (8a, 8b) angeordnet ist, deren Kompressionskraft reduziert werden kann durch die Längsverschiebung der Hülse (5) in Richtung einer Dekompression der elastischen Einrichtung, bis eine Kraft gegen die Längsbewegung der Schraube (114) bzw. der Mutter (413) ausgeübt wird, wobei so die Entkupplung der Reibeinrichtung und eine Erhöhung der Kompressionskraft der gegenüberliegenden elastischen Einrichtung (8a, 8b) bewirkt wird.

2. Stellglied nach Anspruch 1, **dadurch gekennzeichnet, dass** die Kränze (7a, 7b) beide mit Hilfe des Antriebskörpers (3) in Drehrichtung über eine Reibeinrichtung (9a, 10a; 9b, 10b) antreibbar sind, die durch Gleiten in der Weise entkuppelbar ist, dass die Entkupplung in zwei Längsbewegungsrichtungen der Schraube (114) bzw. der Mutter (413) bewirkt werden kann.

3. Stellglied nach einem der Ansprüche 1 und 2, **dadurch gekennzeichnet, dass** jede Reibeinrichtung aus einer Reibscheibe (9a, 9b) und einer sogenannten Kupplungsscheibe (10a, 10b) besteht, die zwischen der Reibscheibe (9a, 9b) und der entsprechenden elastischen Druckeinrichtung (8a, 8b) angeordnet ist.

4. Stellglied nach einem der Ansprüche 1 bis 3, **dadurch gekennzeichnet, dass** die elastischen Druckeinrichtungen (8a, 8b) jeweils verkeilt sind zwischen einerseits einem Teil des Antriebskörpers (3) oder einem fest mit diesem verbundenen Teil (3') und andererseits der Reibeinrichtung (9a, 10a; 9b, 10b) für mindestens eine der besagten elastischen Einrichtungen (5).

5. Stellglied nach einem der Ansprüche 1 bis 4, **dadurch gekennzeichnet, dass** die elastischen Einrichtungen (8a, 8b) jeweils durch einen Stapel von Federscheiben gebildet sind.

6. Stellglied nach einem der Ansprüche 1 bis 5, **dadurch gekennzeichnet, dass** die Einrichtung zur Verbindung der Kränze (7a, 7b) in Rotationsrichtung mit der Hülse (5) mindestens eine Antriebssperrklinke (11a, 11b) aufweist, die zwischen besagtem Kranz (7a, 7b) und besagter Hülse (5) angeordnet ist.

7. Stellglied nach einem der Ansprüche 1 bis 5, **dadurch gekennzeichnet, dass** die Einrichtung zur Verbindung der Kränze (7a, 7b) in Rotationsrichtung mit der Hülse (5) als Freilauf ausgebildet ist.

8. Stellglied nach einem der Ansprüche 1 bis 7, **dadurch gekennzeichnet, dass** die Schraube-Mutter-Kombination (114, 113; 414, 413) irreversibler Art ist.

9. Stellglied nach einem der Ansprüche 1 bis 7, bei dem der Körper (3) mittels eines Motors (16) antreibbar ist, **dadurch gekennzeichnet, dass** die Kombination. Schraube-Mutter (114, 113; 414, 413) reversibler Art ist und dass der Motor eine Bremse aufweist.

10. Stellglied nach einem der Ansprüche 1 bis 9, bei dem die Schraube (114) bzw. die Mutter (413) zur Betätigung einer Festziehvorrichtung (17) vorgesehen ist, und zwar dergestalt, dass, wenn die besagte Schraube oder Mutter am Ende des Festziehvorgangs auf eine Widerstandskraft trifft, dieser Widerstand eine Entkupplung der entsprechenden Reibeinrichtung (9a, 10a) verursacht, sobald die Kompressionskraft seiner elastischen Einrichtung (8a) nicht mehr ausreicht, wobei jedoch eine vorbestimmte Klemmkraft durch die erhöhte Kompressionskraft der gegenüberliegenden elastischen Vorrichtung (8b) aufrecht erhalten bleibt.

## Claims

1. Actuator comprising a nut (113, 413) in engagement with a screw (114, 414), said nut (113) or said screw (414) respectively being locked to a rotary sleeve (5) such that the rotation of said sleeve produces in relation to the latter a translation movement of the screw (114) or the nut (413) respectively which can thus act on any external means (15) by thrust and/or traction, said actuator being **characterised in that** the sleeve (5) is mounted freely in rotation and in translation in an entrainment body (3), itself mounted freely in rotation and fixed in translation in a fixed casing (1), **in that** the sleeve (5) is mounted rotatably in two rings (7a, 7b) which are arranged moveably in translation and entrainable in rotation by said entrainment body (3) while being drawn longitudinally one towards the other by at least two opposing elastic compression means (8a, 8b), **in that** the rings (7a, 7b) exhibit locking means in one direction of rotation (11a, 11b) and at least one direction of translation with the sleeve (5), the directions of rotation being reversed from one ring to the other, and **in that** the entrainment in rotation of at least one of the rings (7a, 7b) with the entrainment body (3) is assured by a friction means (9a, 10a; 9b, 10b) disposed between said ring and the corresponding elastic means (8a, 8b) the compression force of which can thus be reduced by the translation displacement of the sleeve (5) in the direction of decompression of said elastic means when a force is applied against the translation movement of the screw (114) or the nut (413) respectively, thus producing the disengagement by skating of said friction means and an increase in the compression force of the opposing elastic means (8a, 8b).

2. Actuator according to claim 1, **characterised in that** the rings (7a, 7b) are both entrainable in rotation with the entrainment body (3) by a friction means (9a,10a; 9b, 10b) which can be disengaged by skating, such that the disengagement can be effected in the two directions of the translation movement of the screw (114) or the nut (413) respectively.

3. Actuator according to one of claims 1 and 2, **characterised in that** each friction means is constituted by a friction washer (9a, 9b) and a so-called engagement washer (10a, 10b) which is interposed between said friction washer (9a, 9b) and the corresponding elastic compression means (8a, 8b).

4. Actuator according to one of claims 1 to 3, **characterised in that** the elastic compression means (8a, 8b) are each wedged between firstly a portion of the entrainment body (3) or a portion (3') locked thereto and secondly the friction means (9a, 10a; 9b, 10b) for at least one of said elastic means (8a, 8b).

5. Actuator according to one of claims 1 to 4, **characterised in that** the elastic means (8a, 8b) are each constituted by a stack of elastic washers.

6. Actuator according to one of claims 1 to 5, **characterised in that** the means for locking each ring (7a, 7b) in rotation with the sleeve (5) comprise at least one entrainment pawl (11a, 11b) disposed between said ring (7a, 7b) and said sleeve (5).

7. Actuator according to one of claims 1 to 5, **characterised in that** the means for locking each ring (7a, 7b) in rotation with the sleeve (5) are freewheeling means.

8. Actuator according to one of claims 1 to 7, **characterised in that** the screw-nut combination (114, 113; 414, 413) is of the irreversible type.

9. Actuator according to one of claims 1 to 7, of which the body (3) is moved by a motor (16), **characterised in that** the screw-nut combination (114, 113; 414, 413) is of the reversible type and that the motor is provided with a brake.

10. Actuator according to one of claims 1 to 9, of which the screw (114) or nut (413) respectively is designed to actuate a clamping device (17) so that when said screw or nut encounters a resistance force at the end of clamping, this resistance causes disengagement of the corresponding friction means (9a, 10a) as soon as the compression force of its elastic means (8a) is no longer sufficient, a predetermined clamping force being maintained however by the increased compression force of the opposing elastic means (8b).
